(19) Europäisches Patentamt
European Patent Office
Office européen des brevets

(11) **EP 2 311 296 B1**

(12) **EUROPEAN PATENT SPECIFICATION**

(45) Date of publication and mention
of the grant of the patent:
**20.10.2021 Bulletin 2021/42**

(51) Int Cl.:
*H05B 6/36* *(2006.01)*      *H05B 6/44* *(2006.01)*
*H05B 6/40* *(2006.01)*

(21) Application number: **09801110.9**

(22) Date of filing: **25.07.2009**

(86) International application number:
**PCT/US2009/051779**

(87) International publication number:
**WO 2010/011987 (28.01.2010 Gazette 2010/04)**

(54) **ELECTRIC INDUCTION EDGE HEATING OF ELECTRICALLY CONDUCTIVE SLABS**

ELEKTRISCHE INDUKTIONSRANDHEIZUNG VON ELEKTRISCH LEITENDEN PLATTEN

CHAUFFAGE DE BORDS PAR INDUCTION ÉLECTRIQUE DE DALLES ÉLECTROCONDUCTRICES

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **25.07.2008 US 83547 P**

(43) Date of publication of application:
**20.04.2011 Bulletin 2011/16**

(73) Proprietor: **Inductotherm Corp.
Rancocas, New Jersey 08073 (US)**

(72) Inventor: **PEYSAKHOVICH, Vitaly, A.
Moorestown
New Jersey 08057 (US)**

(74) Representative: **Gill, David Alan
WP Thompson
138 Fetter Lane
London EC4A 1BT (GB)**

(56) References cited:
**EP-A2- 1 221 826       WO-A1-2006/088067
US-A- 5 245 148        US-A1- 2006 196 870
US-A1- 2007 235 446     US-A1- 2007 235 446
US-B2- 6 570 141**

• **None**

## Description

### Cross Reference to Related Applications

This application claims the benefit of U.S. Provisional Application No. 61/083,547, filed July 25, 2008.

### Field of the Invention

The present invention relates to electric induction edge heating of slabs formed from an electrically conductive, non-ferrous material.

### Background of the Invention

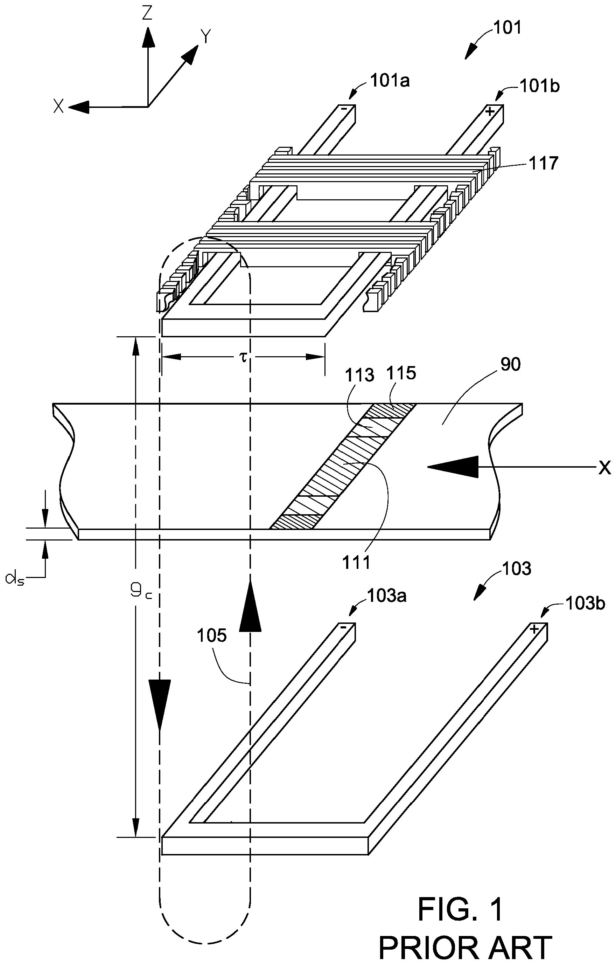

A typical conventional transverse flux inductor comprises an induction coil having two sections. An electrically conductive sheet material, either continuous, or of discrete lengths, can be inductively heated along its cross section by: placing the material between the two sections of the coil; supplying ac current to the coil; and moving the material through the two sections of the coil. For example, in FIG. 1, the induction coil comprises coil section 101 and coil section 103, located respectively above and below the material, which may be, for example, metal strip 90, which moves continuously through the coil in the direction illustrated by the arrow. For orientation, a three-dimension orthogonal space is defined by the X, Y and Z axes shown in FIG. 1. Accordingly the strip moves in the X direction. The gap, $g_c$, or opening, between the coil sections is exaggerated in the figure for clarity, but is fixed in length across the cross section of the strip. Terminals 101a and 101b of coil section 101, and terminals 103a and 103b of coil section 103, are connected to one or more suitable ac power sources (not shown in the figures) with instantaneous current polarities as indicated in the figure. Current flow through the coil creates a common magnetic flux, as illustrated by typical flux line 105 (illustrated by dashed line), that passes perpendicularly through the strip to induce eddy currents in the plane of the strip. Magnetic flux concentrators 117 (partially shown around coil section 101 in the figure), for example, laminations or other high permeability, low reluctance materials, may be used to direct the magnetic field towards the strip. Selection of the ac current frequency (f, in Hertz) for efficient induced heating is given by the equation:

$$ f = 2 \text{x} 10^6 \, \frac{\rho \bullet g_c}{\tau^2 \bullet d_s} $$

where $\rho$ is the electrical resistivity of the strip measured in $\Omega \cdot m$; $g_c$ is the gap (opening) between the coil sections measured in meters; $\tau$ is the pole pitch (step) of the coil measured in meters; and $d_s$ is the thickness of the strip measured in meters.

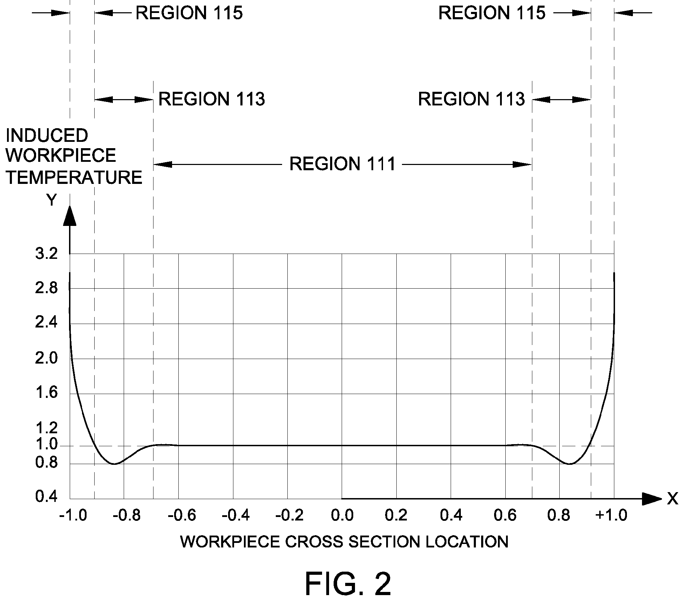

FIG. 2 illustrates a typical cross sectional strip heating profile obtained with the arrangement in FIG. 1 when the pole pitch of the coil is relatively small and, from the above equation, the frequency is correspondingly low. The X-axis in FIG. 2 represents the normalized cross sectional coordinate of the strip with the center of the strip being coordinate 0.0, and the opposing edges of the strip being coordinates +1.0 and -1.0. The Y-axis represents the normalized temperature achieved from induction heating of the strip with normalized temperature 1.0 representing the generally uniform heated temperature across middle region 111 of the strip. Nearer to the edges of the strip, in regions 113 (referred to as the shoulder regions), the cross sectional induced temperatures of the strip decrease from the normalized temperature value of 1.0, and then increase in edge regions 115 of the strip to above the normalized temperature value of 1.0.

In some multi-step industrial processes the material is initially heated and then transferred to a second process step. In transit from initial heating to the second process step, the edges of the material may significantly cool. Consequently some type of edge heating of the material must be accomplished between the initial heating of the material and the second process step.

Relative to electric induction heating, a strip may be defined as a sheet material that is inductively heated in a process where the standard depth of penetration of the eddy current induced in the material is less than the thickness of the material. Conversely a slab may be defined as a sheet material that is inductively heated in a process where the standard depth of penetration of the eddy current induced in the material is greater than the thickness of the material. The technical approach to inductively heating the edges of a sheet material can be different depending upon whether the material is a strip or slab.

A slab inductive heating apparatus of the prior art can be seen in the documents US 2007/235446, US 5245148, EP1221826.

It is one object of the present invention to provide apparatus for, and method of, edge heating of an electrically conductive slab material by utilizing a transverse flux induction coil in a non-conventional manner wherein induced heating is concentrated at the edges of the slab as opposed to being more evenly distributed across the transverse width of the slab.

### Brief Description of the Invention

In one aspect, the present invention is an apparatus for, and method of, electric induction heating of the edges of an electrically conductive slab material with a transverse flux coil by extending the transverse ends of the coil beyond the opposing edges of the slab and inserting a flux compensator in the region between the extended sections of the coil adjacent to each of the opposing edges.

In another aspect, the present invention is a slab edge inductive heating apparatus for inductively heating at least one transverse edge of a slab of an electrically conductive material according to the features of claim 1 and a method of inductively heating at least one transverse edge of an electrically conductive slab according to the features of claim 4.

These and other aspects of the invention are set forth in this specification and the appended claims.

## Brief Description of the Drawings

For the purpose of illustrating the invention, there is shown in the drawings a form that is presently preferred; it being understood, however, that this invention is not limited to the precise arrangements and instrumentalities shown.

FIG. 1 illustrates a prior art transverse flux inductor arrangement.

FIG. 2 graphically illustrates typical cross sectional induced heating characteristics for the transverse flux inductor arrangement shown in FIG. 1.

FIG. 3 is a top plan view of one example of a slab edge inductive heating apparatus of the present invention wherein only the top section of the transverse flux induction coil is visible.

FIG. 4(a) is an elevational view through line A-A in FIG. 3 of the slab edge inductive heating apparatus shown in FIG. 3.

FIG. 4(b) is an elevational view through line B-B in FIG. 3 of the slab edge inductive heating apparatus shown in FIG. 3 with one example of connections to a power supply.

FIG. 4(c) is an isometric view of one example of a flux compensator used in the slab edge inductive heating apparatus shown in FIG. 3.

FIG. 4(d) is an elevational view through line C-C in FIG. 3 of the slab edge inductive heating apparatus shown in FIG. 3.

FIG. 5 graphically illustrates typical cross sectional induced heating characteristics for the transverse flux inductor arrangement shown in FIG. 3, FIG. 4(a), FIG. 4(b), FIG. 4(c) and FIG. 4(d).

FIG. 6(a) illustrates the advantage of using a transverse flux inductor having transverse ends extending beyond the edges of a slab over a transverse flux coil with transverse ends located near the edges of a sheet material as shown in FIG. 6(b).

FIG. 7(a) illustrates the advantageous representative flux field achieved in the present invention over the representative flux field achieved in the prior art as illustrated in FIG. 7(b).

## Detailed Description of the Invention

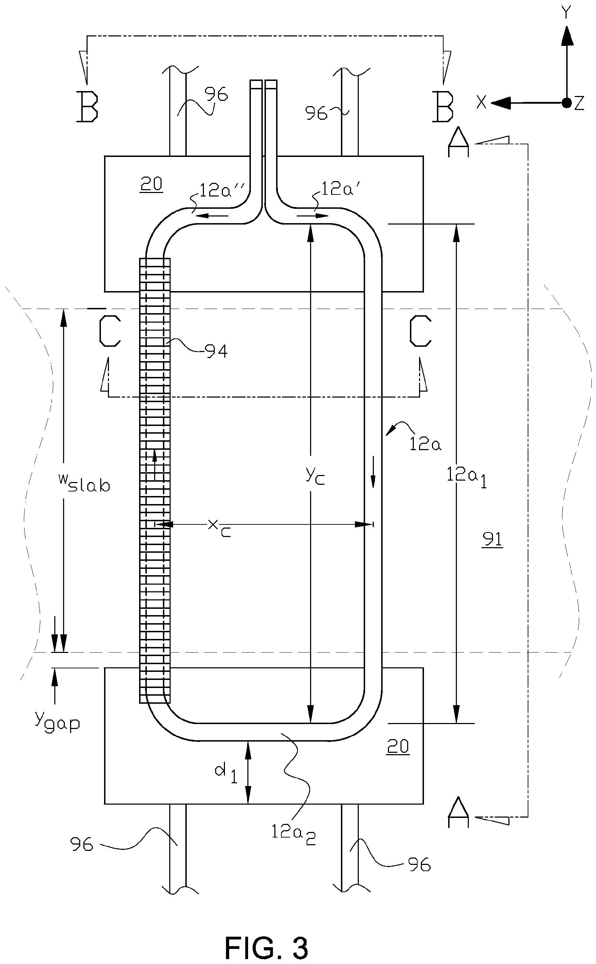

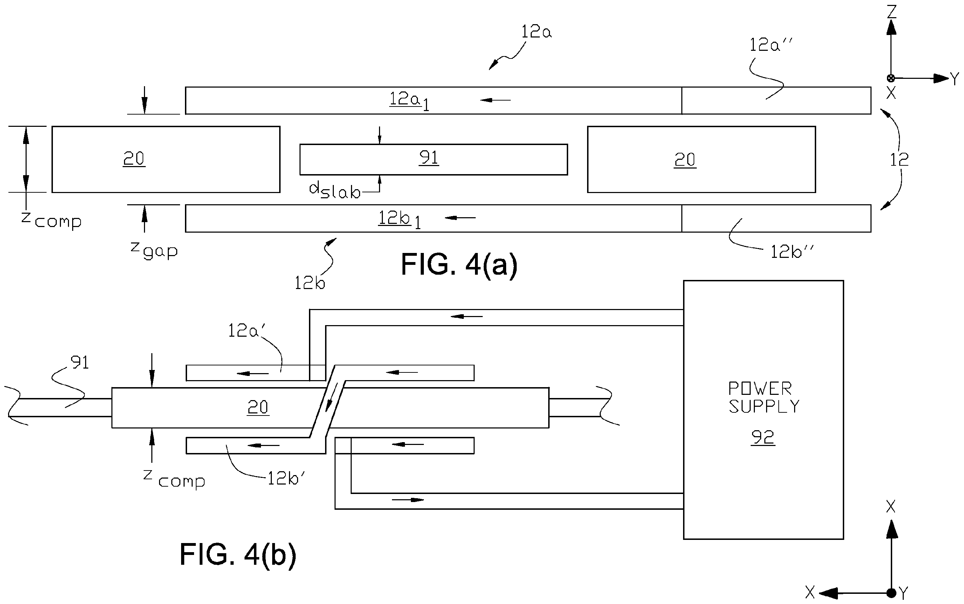

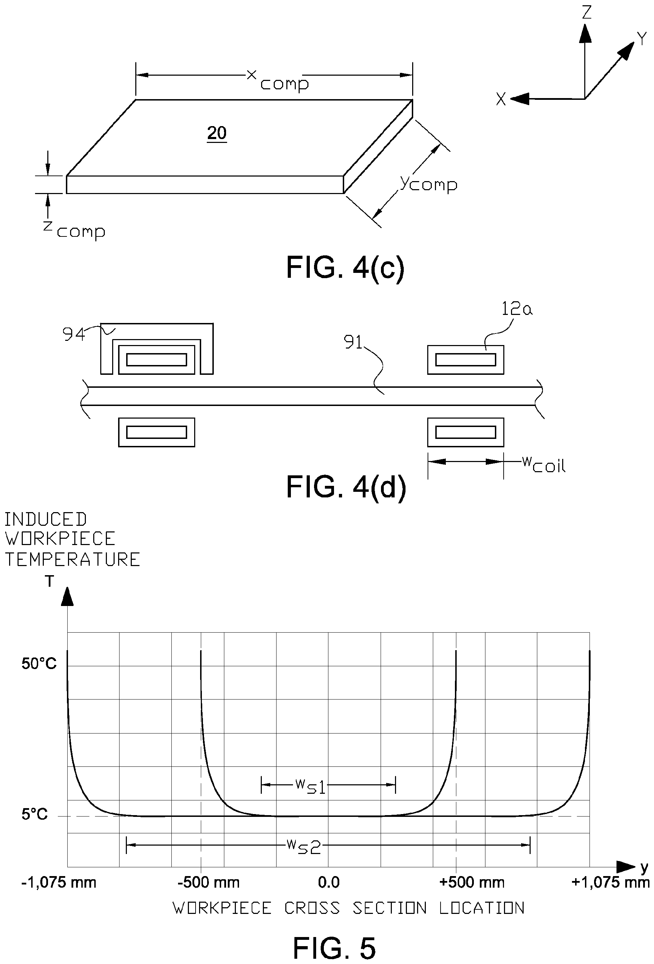

Referring now to the drawings, wherein like numerals indicate like elements, there is shown in FIG. 3, FIG. 4(a), FIG. 4(b), FIG. 4(c) and FIG. 4(d) one example of the slab edge inductive heating apparatus of the present invention.

Slab 91 moves in the X direction between transverse coil segments $12a_1$ and $12bi$ of transverse flux coil sections 12a and 12b, respectively, which are disposed above and below the opposing side surfaces of the slab and make up transverse flux inductor (induction coil) 12. The two coil sections are preferably parallel to each other in the Z direction. An electrically conductive compensator 20, formed from a highly conductive material such as a copper composition, is disposed adjacent to opposing edges of the slab within an edge compensator region as further described below. Coil sections 12a and 12b are preferably connected to a single power supply 92 as shown, for example, in FIG. 4(b), so that instantaneous current flows are in the directions indicated by the arrows. While the supply is connected to both coil sections at one end of each coil in FIG. 4(b), other suitable power connection points can be used in other examples of the invention. For example, power connections may be made to each coil section in the transverse coil segments. A single supply is preferred, rather than a separate supply to each coil section, so that magnetic flux symmetry is easily achieved between the upper and lower coil sections. Magnetic flux concentrators 94 (illustrated in FIG. 3 for only one transverse segment $12a_1$ of coil section 12a) extend around each transverse coil segment making up the pair of coil sections 12a and 12b. Each of the coil sections has a pair of transverse coil segments separated by a pole pitch distance ($x_c$). Each transverse coil segment extends transversely beyond the transverse edge of the slab as shown, for example, in FIG. 3 for transverse coil segment $12a_1$. The extended ends of adjacent transverse coil segments are joined together by a longitudinal coil segment that can be oriented substantially parallel to the length of the slab. For example, as shown in FIG. 3, transverse coil segments $12a_1$ are joined together at one pair of adjacent ends by longitudinal coil segment $12a_2$. In the embodiment of the invention shown in FIG. 3, the opposing extended ends of transverse coil segments $12a_1$ are joined together by a longitudinal coil segment formed from the combination of coil segments 12a' and 12a", which, in turn, connect the transverse flux coil sections to the alternating current power supply. Preferably the magnetic flux concentrators extend over each transverse coil segment for at least the entire width of a slab moving between the coil sections to direct the magnetic flux produced by current flow in the coil sections towards the surfaces of slab 91.

Fundamental to the use of the transverse flux coil as an edge heater for a slab formed from a non-ferromagnetic composition in the present invention is that the output frequency, $f_{slab}$, of power supply 92 should be selected so that it is greater than the value determined by the following equation:

$$f_{slab} > 0.5 \bullet 10^7 \bullet \left( \frac{\rho_{slab}}{d_{slab}^2} \right) \text{ [equation (1)]}$$

where $\rho_{slab}$ is the electrical resistivity of the slab material measured in $\Omega \cdot m$, and $d_{slab}$ is the thickness of the slab measured in meters.

A range of transverse slab widths can be accommodated by one arrangement of the present invention provided that means 96 (FIG. 3) are provided to move the compensators in the Y (transverse) direction to accommodate changes in the widths of the slab. For example the apparatus for moving the compensators may be linear rails or rods structurally connected to the compensators and attached to the output of one or more linear actuators (or alternatively manually operated).

In one particular example of the invention, slabs having transverse widths ($w_{slab}$) between 1,000 mm and 2,150 mm, and thicknesses between 30 mm and 60 mm, can be accommodated with the following slab edge inductive heating apparatus of the present invention. Each transverse flux coil section's pitch ($x_c$) for the pair of transverse coil segments is approximately 900 mm, and each coil section's width ($y_c$) is approximately 2,400 mm, with the coil making up each transverse coil section having a width of approximately 240 mm ($w_{coil}$), when the coil sections are formed as rectangular conductors, as illustrated in FIG. 4(d), with optional interior hollow passage for flow of a cooling medium such as water. As the ratio of the coil pitch to the width of the slab increases, the ratio of power induced in the slab edges to power induced in the remaining transverse cross section of the slab will also increase. Each compensator 20 is formed from an electrically conductive material, such as a copper composition, with a length $x_{comp}$ of approximately 1,300 mm; a width $y_{comp}$ of approximately 900 mm; and a height $z_{comp}$ only slightly less than gap $z_{gap}$ as necessary to prevent short circuiting between the compensator and an adjacent coil section. Distance (gap) $z_{gap}$ between the upper coil section 12a and lower coil section 12b is approximately 250 mm. When the width of the slab is changed, the compensators should be moved in the Y direction to allow a minimum separation $y_{gap}$ between the edge of the slab and the edge of the adjacent compensation. For example a distance of 40 mm for $y_{gap}$ may be satisfactory to allow for weaving of the slab in the Y direction between the compensators. The distance $d_1$ in FIG. 3 will change from approximately zero to 575 mm as the width of the slab changes from the maximum of 2,150 mm to 1,000 mm, and the compensators are moved in the Y direction to accommodate the various widths. The dimensions of the flux compensator utilized in this example of the invention are selected so that each flux compensator is situated in the edge compensator region established between the extended transverse ends of the transverse coil segments and adjoining longitudinal segment of opposing coil sections 12a and 12b, and adjacent to each slab edge.

The above relative dimensions of slab, coils and compensators have been found to be the most favorable in achieving slab edge heating with the transverse flux coil arrangement of the present invention with a range of slabs as described above. The above arrangement is extended to other configurations in other examples of the invention. FIG. 5 illustrates two examples of the achievable edge heating with the present invention wherein the extreme edges of a slab with a width of 2,150 mm or 1,000 mm can achieve an induced heating temperature of 50°C of the slab edges while a nominal temperature rise of 5°C in the central cross sectional region of the slab will occur. As illustrated in FIG. 5, for the slab with a width of 1,000 mm, the transverse edge of the slab can be inductively heated to ten times (50°C) the temperature (5°C) of approximately 65 percent of the interior transverse width ($w_{s1}$) of the slab with the slab edge inductive heating apparatus of the present invention. For the slab with a width of 2,150 mm, the transverse edge of the slab can be inductively heated to ten times (50°C) the temperature (5°C) of approximately 80 percent of the interior transverse width ($w_{s2}$) of the slab with the slab edge inductive heating apparatus of the present invention.

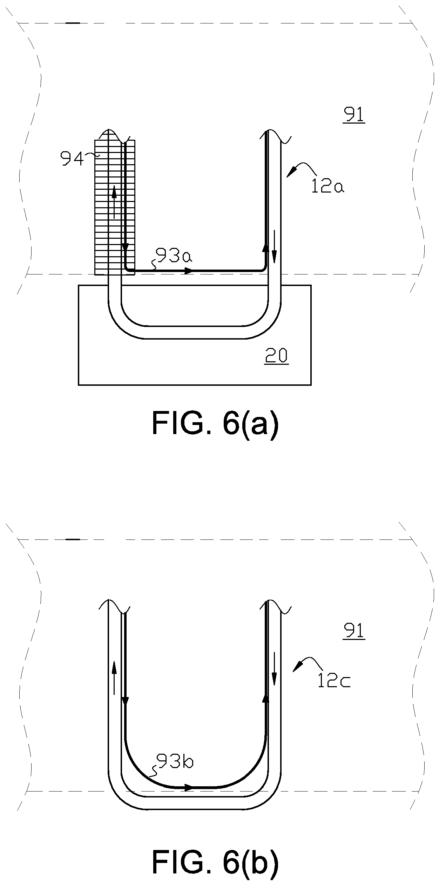

Extending the transverse ends of the transverse flux induction coil used in the present invention maximizes concentration of induced currents in the edge regions of the strip. In FIG. 6(b), with the transverse ends of the coil positioned near a slab's edge, instantaneous induced eddy current flow (represented by line 93b with arrows), and therefore, induced heating, in the extreme edges of the slab is not maximized; however, as in the present invention, with extended transverse coil ends and magnetic flux concentrators, as illustrated in FIG. 6(a), induced eddy current flow (represented by line 93a with arrows) in the extreme edges of the slab is maximized.

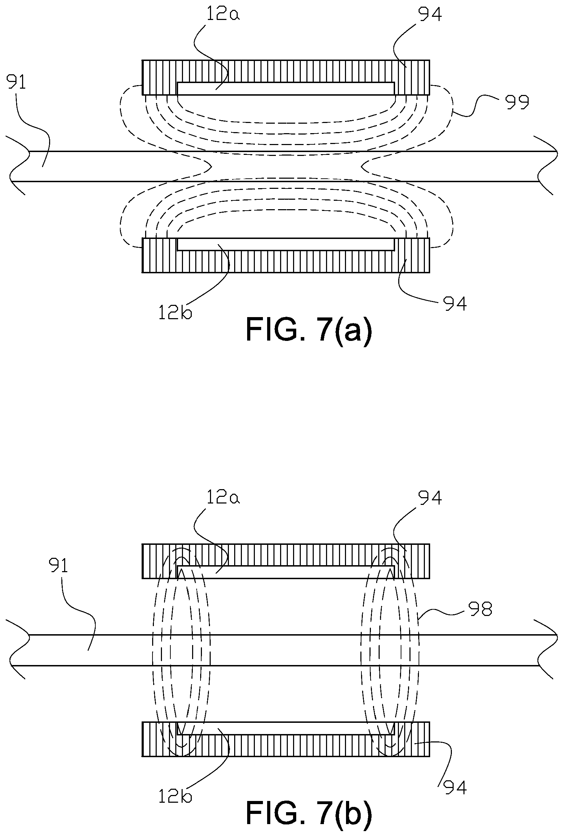

Choosing the operating frequency, $f_{slab}$, based on the electrical conductivity of the slab material and thickness of the slab results in magnetic flux distribution 99 (dashed lines) as illustrated in FIG. 7(a), which is favorable to edge heating, as opposed to magnetic flux distribution 98 (dashed lines) shown in FIG. 7(b) for the prior art described above. Generally for efficient edge heating in the present invention, the ratio of the thickness of the slab to the standard depth of eddy current penetration is preferably greater than about 3. This is contrasted with the prior art strip heating described about where the standard depth of eddy current penetration is less than the thickness of the strip.

Utilization of the flux compensators between the extended ends of the transverse flux coil (in lieu of air) significantly reduces the impedance of the coil and allows sufficient power to be provided from the power supply for inductive edge heating of the slab.

Each slab moving through the transverse flux coil sections of the transverse flux coil may be of any length.

While a transverse flux inductor having single turn coil sections is used in the above examples of the invention, multiple turn coil sections are utilized in other examples of the invention. While the embodiments of the slab edge inductive heating apparatus and method in the above examples of the invention are used to heat both transverse edges of the slab, in other examples only one of the transverse edges of the slab may be inductively heated.

**Claims**

1. A slab edge inductive heating apparatus comprising:

   a pair of transverse flux coil sections (12a, 12b), each one of the pair of transverse flux coil sections having a pair of transverse coil segments ($12a_1$, $12b_1$), the pair of transverse coils segments of one of the pair of transverse flux coil sections (12a, 12b) spaced apart from the pair of transverse coil segments of the other one of the pair of transverse flux coil sections by a coil gap to form a slab induction heating region through which a slab (91) can pass with the length of the slab oriented normal to the pair of transverse coil segments of each one of the pair of transverse flux coil sections, the transverse coil segments for each one of the pair of transverse flux coil sections (12a, 12b) co-planarly separated from each other by a coil pitch distance, the transverse coil segments of each one of the pair of transverse flux coil sections having an extended transverse ends extending transversely beyond at least one edge of the slab (91) when the slab is positioned in the slab induction heating region, the extended transverse ends of the transverse coil segments of each one of the pair of transverse flux coil sections (12a, 12b) connected together by a separate longitudinal coil segment ($12a_2$) oriented parallel to the length of the slab when the slab is positioned in the slab induction heating region, the opposing extended transverse ends and the longitudinal coil segment of each one of the pair of transverse flux coil sections forming an edge compensator region between the extended transverse ends and the longitudinal coil segment of each one of the pair of transverse flux coil sections, the opposing extended transverse ends and the longitudinal coil segment of each one of the pair of transverse flux coil sections separated from each other by the coil gap;
   at least one magnetic flux concentrator (94) surrounding at least the transverse coils segments of the pair of transverse flux coil sections (12a, 12b) in all directions facing away from the slab induction heating region;
   at least one alternating current power source (92) connected to the pair of transverse flux coil sections (12a, 12b) so that an instantaneous current flows in the same direction through each one of the pair of transverse flux coil sections,

**characterized by**

   each one of the at least one alternating power source (92) having an output frequency, $f_{slab}$, determined according to the following equation:

$$f_{slab} > 0.5 \bullet 10^7 \bullet \left( \frac{\rho_{slab}}{d_{slab}^2} \right)$$

   where $\rho_{slab}$ is the electrical resistivity of the slab and $d_{slab}$ is the thickness of the slab; and an electrically conductive compensator (20) disposed within the edge compensator region, the electrically conductive compensator having a compensator height less than the height of the coil gap as necessary to prevent short circuiting between the electrically conductive compensator and the extended transverse ends and the longitudinal coil segment of each one of the pair of transverse flux coil sections adjacent to the electrically conductive compensator to inductively heat the at least one transverse edge of the slab to a slab edge temperature greater than a slab interior transverse temperature when the slab is positioned in the slab induction heating region.

2. A slab edge inductive heating apparatus according to claim 1, wherein the electrically conductive compensator (20) is generally rectangular, the length ($x_{comp}$) of the electrically conductive compensator greater than the pole pitch distance ($x_c$), the height ($z_{comp}$) of the electrically conductive compensator equal to the distance between the extended transverse ends and longitudinal coil segment of the pair of transverse flux coil sections (12a, 12b) while maintaining electrical isolation between the pair of transverse flux coil sections, the height ($z_{comp}$) of the electrically conductive compensator greater than the thickness of the slab.

3. A slab edge inductive heating apparatus according to claim 1 or 2, including an apparatus (96) for moving the electrically conductive compensator (20) responsive to a change in the transverse width ($w_{slab}$) of the slab in the slab induction heating region when the slab is positioned within the slab induction heating region.

4. A method of inductively heating at least one transverse edge of an electrically conductive slab (91), the method comprising the steps of:

passing the electrically conductive slab (91) between a pair of transverse flux coil sections (12a, 12b), each one of the pair of transverse flux coil sections having a pair of transverse coil segments, the pair of transverse coils segments of one of the pair of transverse flux coil sections (12a, 12b) spaced apart from the pair of transverse coil segments of the other one of the pair of transverse flux coil sections by a coil gap to form a slab induction heating region through which the electrically conductive slab (91) passes with the length of the electrically conductive slab oriented normal to the pair of transverse coil segments of each one of the pair of transverse flux coil sections, the transverse coil segments for each one of the pair of transverse flux coil sections (12a, 12b) co-planarly separated from each other by a coil pitch distance, the transverse coil segments of each one of the pair of transverse flux coil sections (12a, 12b) having an extended transverse ends extending transversely beyond the at least one transverse edge of the slab in the slab induction heating region, the extended transverse ends of the transverse coil segments of each one of the pair of transverse flux coil sections (12a, 12b) connected together by a separate longitudinal coil segment ($12a_2$) oriented parallel to the length of the slab in the slab induction heating region, the extended transverse ends and the longitudinal coil segment of each one of the pair of transverse flux coil sections forming an edge compensator region between the extended transverse ends and the longitudinal coil segment of each one of the pair of transverse flux coil sections (12a, 12b), the extended transverse ends and the longitudinal coil segment of each one of the pair of transverse coil sections separated from each other by the coil gap, at least the transverse coil segments of the pair of transverse flux coil sections surrounded by at least one magnetic flux concentrator (94) in all directions facing away from the slab induction heating region; supplying alternating current to the pair of transverse flux coil sections (12a, 12b) so that an instantaneous current flows in the same direction through each one of the pair of transverse flux coil sections;

**characterized by**

setting the frequency of the alternating current to a slab edge heating frequency, $f_{slab}$, determined according to the following equation:

$$f_{slab} > 0.5 \bullet 10^{7} \bullet \left( \frac{\rho_{slab}}{d_{slab}^{2}} \right)$$

where $\rho_{slab}$ is the electrical resistivity of the slab and $d_{slab}$ is the thickness of the slab; and inserting an electrically conductive compensator (20) within the edge heating compensator region with the electrically conductive compensator having a compensator height less than the height of the coil gap as necessary to prevent short circuiting between the electrically conductive compensator and the extended transverse ends and the longitudinal coil segment of each one of the pair of transverse flux coil adjacent to the electrically conductive compensator sections for reduction in the impedance of the pair of transverse flux coil sections to inductively heat the at least one transverse edge of the electrically conductive slab to a slab transverse edge temperature greater than a slab interior transverse temperature when the electrically conductive slab passes between the pair of transverse flux coil sections.

5. A method according to claim 4, including the step of inductively heating the at least one transverse edge of the electrically conductive slab (91) having a width of 1,000 mm to the slab transverse edge temperature at least ten times as high as the slab interior transverse temperature in 65 percent of the interior transverse width of the slab (91).

6. A method according to claim 4, including the step of inductively heating the at least one transverse edge of the electrically conductive slab (91) having a width of 2,150 mm to the slab transverse edge temperature at least ten times as high as the slab interior transverse temperature in 80 percent of the interior transverse width of the slab (91).

7. A method according to claim 4, wherein the ratio of the thickness ($d_{slab}$) of the slab to a standard depth of induced eddy current penetration in the slab is greater than 3.

8. A method according to any one of claims 4 to 7, including the step of moving the electrically conductive compensator (20) responsive to a change in the transverse width of the slab (91) in the slab induction heating region.

**Patentansprüche**

1. Induktive Plattenrandheizvorrichtung, die Folgendes umfasst:

   ein Paar Transversalfluss-Spulenabschnitte (12a, 12b), wobei jeder des Paars Transversalfluss-Spulenabschnitte ein Paar querlaufender Spulensegmente ($12a_1$, $12b_1$) aufweist, das Paar querlaufender Spulensegmente von einem des Paars Transversalfluss-Spulenabschnitte (12a, 12b) von dem Paar querlaufender Spulensegmente des anderen des Paars Transversalfluss-Spulenabschnitte durch einen Spulenspalt beabstandet ist, um einen Induktions-Plattenheizbereich zu bilden, durch den eine Platte (91) laufen kann, wobei die Länge der Platte senkrecht zu dem Paar querlaufender Spulensegmente jedes des Paars Transversalfluss-Spulenabschnitte orientiert ist, wobei die querlaufenden Spulensegmente für jeden des Paars Transversalfluss-Spulenabschnitte (12a, 12b) um einen Spulenteilungsabstand koplanar voneinander beabstandet sind, wobei die querlaufenden Spulensegmente jedes des Paars Transversalfluss-Spulenabschnitte verlängerte querlaufende Enden aufweisen, die sich in Querrichtung über mindestens einen Rand der Platte (91) hinaus erstrecken, wenn die Platte in dem Induktions-Plattenheizbereich positioniert ist, wobei die verlängerten querlaufenden Enden der querlaufenden Spulensegmente jedes des Paars Transversalfluss-Spulenabschnitte (12a, 12b) durch ein separates längslaufendes Spulensegment ($12a_2$) miteinander verbunden sind, das parallel zur Länge der Platte orientiert ist, wenn die Platte in dem Induktions-Plattenheizbereich positioniert ist, wobei die gegenüberliegenden verlängerten querlaufenden Enden und das längslaufende Spulensegment jedes des Paars Transversalfluss-Spulenabschnitte einen Randkompensatorbereich zwischen den verlängerten querlaufenden Enden und dem längslaufenden Spulensegment jedes des Paars Transversalfluss-Spulenabschnitte bilden, wobei die gegenüberliegenden verlängerten querlaufenden Enden und das längslaufende Spulensegment jedes des Paars Transversalfluss-Spulenabschnitte durch den Spulenspalt voneinander beabstandet sind; mindestens einen Magnetflusskonzentrator (94), der mindestens die querlaufenden Spulensegmente des Paars Transversalfluss-Spulenabschnitte (12a, 12b) in allen von dem Induktions-Plattenheizbereich weg weisenden Richtungen umgibt; mindestens eine Wechselstrom-Leistungsquelle (92), die mit dem Paar Transversalfluss-Spulenabschnitte (12a, 12b) verbunden ist, sodass durch jeden des Paars Transversalfluss-Spulenabschnitte ein Momentanstrom in derselben Richtung fließt,
   **dadurch gekennzeichnet, dass**
   jede der mindestens einen Wechselstrom-Leistungsquelle (92) eine Ausgangsfrequenz $f_{slab}$ aufweist, die gemäß der folgenden Gleichung bestimmt wird:

   $$f_{slab} > 0.5 \bullet 10^7 \bullet \left( \frac{\rho_{slab}}{d_{slab}^2} \right)$$

   wobei $\rho_{slab}$ der spezifische elektrische Widerstand der Platte ist und $d_{slab}$ die Dicke der Platte ist, und
   einen elektrisch leitfähigen Kompensator (20), der in dem Randkompensatorbereich angeordnet ist, wobei der elektrisch leitfähige Kompensator eine Kompensatorhöhe aufweist, die in dem Maß geringer als die Höhe des Spulenspalts ist, das notwendig ist, um die Kurzschlussbildung zwischen dem elektrisch leitfähigen Kompensator und den verlängerten querlaufenden Enden und dem längslaufenden Spulensegment jedes des Paars Transversalfluss-Spulenabschnitte, die dem elektrisch leitfähigen Kompensator benachbart sind, zu verhindern, um den mindestens einen querlaufenden Rand der Platte auf eine Plattenrandtemperatur induktiv zu erwärmen, die höher als eine Transversaltemperatur des Platteninneren ist, wenn die Platte in dem Induktions-Plattenheizbereich positioniert ist.

2. Induktive Plattenrandheizvorrichtung nach Anspruch 1, wobei der elektrisch leitfähige Kompensator (20) allgemein rechteckig ist, die Länge ($x_{comp}$) des elektrisch leitfähigen Kompensators größer als der Polteilungsabstand ($x_c$) ist, die Höhe ($z_{comp}$) des elektrisch leitfähigen Kompensators gleich dem Abstand zwischen den verlängerten querlaufenden Enden und dem längslaufenden Spulensegment des Paars Transversalfluss-Spulenabschnitte (12a, 12b) ist, während die elektrische Trennung zwischen dem Paar Transversalfluss-Spulenabschnitte aufrechterhalten wird, wobei die Höhe ($z_{comp}$) des elektrisch leitfähigen Kompensators größer als die Dicke der Platte ist.

3. Induktive Plattenrandheizvorrichtung nach Anspruch 1 oder 2, umfassend eine Vorrichtung (96) zum Verschieben des elektrisch leitfähigen Kompensators (20) als Reaktion auf eine Änderung der Breite ($w_{slab}$) in Querrichtung der Platte in dem Induktions-Plattenheizbereich, wenn die Platte in dem Induktions-Plattenheizbereich positioniert ist.

4. Verfahren zum induktiven Erwärmen mindestens eines querlaufenden Rands einer elektrisch leitfähigen Platte (91), wobei das Verfahren folgende Schritte umfasst:

Hindurchbewegen der elektrisch leitfähigen Platte (91) zwischen einem Paar Transversalfluss-Spulenabschnitte (12a, 12b), wobei jeder des Paars Transversalfluss-Spulenabschnitte ein Paar querlaufender Spulensegmente aufweist, wobei das Paar querlaufender Spulensegmente von einem des Paars Transversalfluss-Spulenabschnitte (12a, 12b) von dem Paar querlaufender Spulensegmente des anderen des Paars Transversalfluss-Spulenabschnitte durch einen Spulenspalt beabstandet ist, um einen Induktions-Plattenheizbereich zu bilden, durch den die elektrisch leitfähige Platte (91) läuft, wobei die Länge der elektrisch leitfähigen Platte senkrecht zu dem Paar querlaufender Spulensegmente jedes des Paars Transversalfluss-Spulenabschnitte orientiert ist, wobei die querlaufenden Spulensegmente für jeden des Paars Transversalfluss-Spulenabschnitte (12a, 12b) um einen Spulenteilungsabstand koplanar voneinander beabstandet sind, wobei die querlaufenden Spulensegmente jedes des Paars Transversalfluss-Spulenabschnitte (12a, 12b) verlängerte querlaufende Enden aufweisen, die sich in Querrichtung über den mindestens einen querlaufenden Rand der Platte in dem Induktions-Plattenheizbereich hinaus erstrecken, wobei die verlängerten querlaufenden Enden der querlaufenden Spulensegmente jedes des Paars Transversalfluss-Spulenabschnitte (12a, 12b) durch ein separates längslaufendes Spulensegment ($12a_2$) miteinander verbunden sind, das parallel zur Länge der Platte in dem Induktions-Plattenheizbereich orientiert ist, wobei die verlängerten querlaufenden Enden und das längslaufende Spulensegment jedes des Paars Transversalfluss-Spulenabschnitte einen Randkompensatorbereich zwischen den verlängerten querlaufenden Enden und dem längslaufenden Spulensegment jedes des Paars Transversalfluss-Spulenabschnitte (12a, 12b) bilden, wobei die verlängerten querlaufenden Enden und das längslaufende Spulensegment jedes des Paars Transversalfluss-Spulenabschnitte durch den Spulenspalt voneinander beabstandet sind, wobei mindestens die querlaufenden Spulensegmente des Paars Transversalfluss-Spulenabschnitte in allen von dem Induktions-Plattenheizbereich weg weisenden Richtungen von mindestens einen Magnetflusskonzentrator (94) umgeben sind;

Zuführen von Wechselstrom zu dem Paar Transversalfluss-Spulenabschnitte (12a, 12b), sodass durch jeden des Paars Transversalfluss-Spulenabschnitte ein Momentanstrom in derselben Richtung fließt,

**gekennzeichnet durch**

Einstellen der Frequenz des Wechselstroms auf eine Plattenrand-Heizfrequenz $f_{slab}$, die gemäß der folgenden Gleichung bestimmt wird:

$$f_{slab} > 0.5 \bullet 10^{\,7} \bullet \left( \frac{\rho_{slab}}{d_{slab}^{\,2}} \right)$$

wobei $\rho_{slab}$ der spezifische elektrische Widerstand der Platte ist und $d_{slab}$ die Dicke der Platte ist, und

Einfügen eines elektrisch leitfähigen Kompensators (20) in den Randheizungs-Kompensatorbereich, wobei der elektrisch leitfähige Kompensator eine Kompensatorhöhe aufweist, die die in dem Maß geringer als die Höhe des Spulenspalts ist, das notwendig ist, um die Kurzschlussbildung zwischen dem elektrisch leitfähigen Kompensator und den verlängerten querlaufenden Enden und dem längslaufenden Spulensegment jedes des Paars Transversalfluss-Spulenabschnitte, die dem elektrisch leitfähigen Kompensator benachbart sind, zu verhindern, zum Verringern der Impedanz des Paars Transversalfluss-Spulenabschnitte zum induktiven Erwärmen des mindestens einen querlaufenden Rands der elektrisch leitfähigen Platte auf eine Transversalrandtemperatur der Platte, die höher als eine Transversaltemperatur des Platteninneren ist, wenn die elektrisch leitfähige Platte zwischen dem Paar Transversalfluss-Spulenabschnitte läuft.

5. Verfahren nach Anspruch 4, umfassend den Schritt des induktiven Erwärmens des mindestens einen querlaufenden Rands der elektrisch leitfähigen Platte (91) mit einer Breite von 1000 mm auf die Transversalrandtemperatur der Platte, die mindestens das Zehnfache der Transversaltemperatur des Platteninneren in 65 Prozent der inneren Breite in Querrichtung der Platte (91) beträgt.

6. Verfahren nach Anspruch 4, umfassend den Schritt des induktiven Erwärmens des mindestens einen querlaufenden Rands der elektrisch leitfähigen Platte (91) mit einer Breite von 2150 mm auf die Transversalrandtemperatur der Platte, die mindestens das Zehnfache der Transversaltemperatur des Platteninneren in 80 Prozent der inneren Breite in Querrichtung der Platte (91) beträgt.

**7.** Verfahren nach Anspruch 4, wobei das Verhältnis der Dicke ($d_{slab}$) der Platte zu einer Standardeindringtiefe induzierter Wirbelströme größer als 3 ist.

**8.** Verfahren nach einem der Ansprüche 4 bis 7, umfassend den Schritt des Verschiebens des elektrisch leitfähigen Kompensators (20) als Reaktion auf eine Änderung der Breite in Querrichtung der Platte (91) in dem Induktions-Plattenheizbereich.

## Revendications

**1.** Appareil de chauffage par induction de bords de dalle comportant :

une paire de sections de bobine à flux transversal (12a, 12b), chacune de la paire de sections de bobine à flux transversal ayant une paire de segments transversaux de bobine ($12a_1$, $12b_1$), la paire de segments transversaux de bobine de l'une de la paire de sections de bobine à flux transversal (12a, 12b) étant espacée par rapport à la paire de segments transversaux de bobine de l'autre de la paire de sections de bobine à flux transversal par un espace de bobine pour former une région de chauffage par induction de dalle au travers de laquelle une dalle (91) peut passer, la longueur de la dalle étant orientée de manière perpendiculaire par rapport à la paire de segments transversaux de bobine de chacune de la paire de sections de bobine à flux transversal, les segments transversaux de bobine pour chacune de la paire de sections de bobine à flux transversal (12a, 12b) étant séparés de manière coplanaire l'un par rapport à l'autre par une distance de pas de bobine, les segments transversaux de bobine de chacune de la paire de sections de bobine à flux transversal ayant des extrémités transversales étendues s'étendant dans le sens transversal au-delà d'au moins un bord de la dalle (91) quand la dalle est positionnée dans la région de chauffage par induction de dalle, les extrémités transversales étendues des segments transversaux de bobine de chacune de la paire de sections de bobine à flux transversal (12a, 12b) étant connectées ensemble par un segment longitudinal de bobine séparé ($12a_2$) orienté de manière parallèle par rapport à la longueur de la dalle quand la dalle est positionnée dans la région de chauffage par induction de dalle, les extrémités transversales étendues opposées et le segment longitudinal de bobine de chacune de la paire de sections de bobine à flux transversal formant une région de compensateur de bord entre les extrémités transversales étendues et le segment longitudinal de bobine de chacune de la paire de sections de bobine à flux transversal, les extrémités transversales étendues opposées et le segment longitudinal de bobine de chacune de la paire de sections de bobine à flux transversal étant séparés les uns par rapport aux autres par l'espace de bobine ;
au moins un concentrateur à flux magnétique (94) entourant au moins les segments transversaux de bobine de la paire de sections de bobine à flux transversal (12a, 12b) dans toutes les directions allant à l'opposé de la région de chauffage par induction de dalle ;
au moins une source d'alimentation en courant alternatif (92) connectée à la paire de sections de bobine à flux transversal (12a, 12b) de telle sorte qu'un courant instantané s'écoule dans la même direction au travers de chacune de la paire de sections de bobine à flux transversal,

**caractérisé par**

chacune de ladite au moins une source d'alimentation en courant alternatif (92) ayant une fréquence de sortie, $f_{slab}$, déterminée en fonction de l'équation suivante :

$$ f_{slab} > 0.5 \cdot 10^7 \cdot \left( \frac{\rho_{slab}}{d_{slab}^2} \right) $$

où $\rho_{slab}$ est la résistivité électrique de la dalle et $d_{slab}$ est l'épaisseur de la dalle ; et
un compensateur électriquement conducteur (20) disposé à l'intérieur de la région de compensateur de bord, le compensateur électriquement conducteur ayant une hauteur de compensateur inférieure à la hauteur de l'espace de bobine tel qu'il est nécessaire pour empêcher tout court-circuit entre le compensateur électriquement conducteur et les extrémités transversales étendues et le segment longitudinal de bobine de chacune de la paire de sections de bobine à flux transversal de manière adjacente par rapport au compensateur électriquement conducteur pour chauffer par induction ledit au moins un bord transversal de la dalle jusqu'à une température de bord de dalle supérieure à une température transversale intérieure de dalle quand la dalle est positionnée dans la région de chauffage par induction de dalle.

**2.** Appareil de chauffage par induction de bords de dalle selon la revendication 1, dans lequel le compensateur électriquement conducteur (20) est généralement rectangulaire, la longueur ($x_{comp}$) du compensateur électriquement conducteur étant supérieure à la distance de pas polaire ($x_c$), la hauteur ($z_{comp}$) du compensateur électriquement conducteur étant égale à la distance entre les extrémités transversales étendues et le segment longitudinal de bobine de la paire de sections de bobine à flux transversal (12a, 12b) tout en maintenant une isolation électrique entre la paire de sections de bobine à flux transversal, la hauteur ($z_{comp}$) du compensateur électriquement conducteur étant supérieure à l'épaisseur de la dalle.

**3.** Appareil de chauffage par induction de bords de dalle selon la revendication 1 ou la revendication 2, comprenant un appareil (96) servant à déplacer le compensateur électriquement conducteur (20) en réponse à un changement dans la largeur transversale ($w_{slab}$) de la dalle dans la région de chauffage par induction de dalle quand la dalle est positionnée à l'intérieur de la région de chauffage par induction de dalle.

**4.** Procédé de chauffage par induction d'au moins un bord transversal d'une dalle électriquement conductrice (91), le procédé comportant les étapes consistant à :

faire passer la dalle électriquement conductrice (91) entre une paire de sections de bobine à flux transversal (12a, 12b), chacune de la paire de sections de bobine à flux transversal ayant une paire de segments transversaux de bobine, la paire de segments transversaux de bobine de l'une de la paire de sections de bobine à flux transversal (12a, 12b) étant espacée par rapport à la paire de segments transversaux de bobine de l'autre de la paire de sections de bobine à flux transversal par un espace de bobine pour former une région de chauffage par induction de dalle au travers de laquelle la dalle électriquement conductrice (91) passe, la longueur de la dalle électriquement conductrice étant orientée de manière perpendiculaire par rapport à la paire de segments transversaux de bobine de chacune de la paire de sections de bobine à flux transversal, les segments transversaux de bobine pour chacune de la paire de sections de bobine à flux transversal (12a, 12b) étant séparés de manière coplanaire l'un par rapport à l'autre par une distance de pas de bobine, les segments transversaux de bobine de chacune de la paire de sections de bobine à flux transversal (12a, 12b) ayant des extrémités transversales étendues s'étendant dans le sens transversal au-delà dudit au moins un bord transversal de la dalle dans la région de chauffage par induction de dalle, les extrémités transversales étendues des segments transversaux de bobine de chacune de la paire de sections de bobine à flux transversal (12a, 12b) étant connectées ensemble par un segment longitudinal de bobine

séparé ($12a_2$) orienté de manière parallèle par rapport à la longueur de la dalle dans la région de chauffage par induction de dalle, les extrémités transversales étendues et le segment longitudinal de bobine de chacune de la paire de sections de bobine à flux transversal formant une région de compensateur de bord entre les extrémités transversales étendues et le segment longitudinal de bobine de chacune de la paire de sections de bobine à flux transversal (12a, 12b), les extrémités transversales étendues et le segment longitudinal de bobine de chacune de la paire de sections de bobine à flux transversal étant séparés les uns par rapport aux autres par l'espace de bobine, au moins les segments transversaux de bobine de la paire de sections de bobine à flux transversal entourés par au moins un concentrateur à flux magnétique (94) dans toutes les directions allant à l'opposé de la région de chauffage par induction de dalle ; fournir du courant alternatif à la paire de sections de bobine à flux transversal (12a, 12b) de telle sorte qu'un courant instantané s'écoule dans la même direction au travers de chacune de la paire de sections de bobine à flux transversal ;

**caractérisé par** les étapes consistant à

régler la fréquence du courant alternatif selon une fréquence de chauffage de bord de dalle, $f_{slab}$, déterminée en fonction de l'équation suivante :

$$ f_{slab} > 0.5 \cdot 10^7 \cdot \left( \frac{\rho_{slab}}{d_{slab}^2} \right) $$

où $\rho_{slab}$ est la résistivité électrique de la dalle et $d_{slab}$ est l'épaisseur de la dalle ; et insérer un compensateur électriquement conducteur (20) à l'intérieur de la région de compensateur de chauffage de bord, le compensateur électriquement conducteur ayant une hauteur de compensateur inférieure à la hauteur de l'espace de bobine tel qu'il est nécessaire pour empêcher tout court-circuit entre le compensateur électriquement conducteur et les extrémités transversales étendues et le segment longitudinal de bobine de chacune de la paire de sections de bobine à flux transversal de manière adjacente par rapport aux sections de compensateur électriquement conducteur à des fins de réduction dans l'impédance de la paire de sections de bobine à flux transversal pour chauffer par induction ledit au moins un bord transversal de la dalle électriquement conductrice jusqu'à une température de bord transversal de dalle supérieure à une température transversale intérieure de dalle quand la dalle électriquement conductrice passe entre la paire de sections de bobine à flux transversal.

5. Procédé selon la revendication 4, comprenant l'étape consistant à chauffer par induction ledit au moins un bord transversal de la dalle électriquement conductrice (91) ayant une largeur de 1000 mm jusqu'à la température de bord transversal de dalle au moins dix fois supérieure à la température transversale intérieure de dalle dans 65 pour cent de la largeur transversale intérieure de la dalle (91).

6. Procédé selon la revendication 4, comprenant l'étape consistant à chauffer par induction ledit au moins un bord transversal de la dalle électriquement conductrice (91) ayant une largeur de 2150 mm jusqu'à la température de bord transversal de dalle au moins dix fois supérieure à la température transversale intérieure de dalle dans 80 pour cent de la largeur transversale intérieure de la dalle (91).

7. Procédé selon la revendication 4, dans lequel le rapport entre l'épaisseur ($d_{slab}$) de la dalle et une profondeur standard de pénétration de courants de Foucault induits dans la dalle est supérieur à 3.

8. Procédé selon l'une quelconque des revendications 4 à 7, comprenant l'étape consistant à déplacer le compensateur électriquement conducteur (20) en réponse à un changement dans la largeur transversale de la dalle (91) dans la région de chauffage par induction de dalle.

FIG. 1
PRIOR ART

FIG. 2

FIG. 3

FIG. 4(a)

FIG. 4(b)

EP 2 311 296 B1

FIG. 4(c)

FIG. 4(d)

WORKPIECE CROSS SECTION LOCATION

FIG. 5

FIG. 6(a)

FIG. 6(b)

FIG. 7(a)

FIG. 7(b)

**EP 2 311 296 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61083547
- US 2007235446 A
- US 5245148 A
- EP 1221826 A